# EUROPÄISCHE PATENTSCHRIFT

(11) **EP 1 711 994 B1**
(45) Veröffentlichungstag und Bekanntmachung des Hinweises auf die Patenterteilung: **29.07.2009**
(21) Anmeldenummer: 05701390.6
(22) Anmeldetag: 09.02.2005
(51) Int. Cl.: H02K 21/14, H02K 1/20

(54) **STATORBAUEINHEIT**
STATOR MODULE
UNITE MODULAIRE STATOR

(30) Priorität: 14.04.2004 DE 102004018520
(43) Veröffentlichungstag der Anmeldung: 18.10.2006
(60) Teilanmeldung: 07024881.0
(73) Patentinhaber: Voith Turbo GmbH & Co. KG, 89522 Heidenheim (DE)
(72) Erfinder: MÜHLBERGER, Uwe, 89522 Heidenheim (DE); LANGE, Andreas, 89551 Zang (DE); HOFFMANN, Rolf, 89518 Heidenheim (DE)
(74) Vertreter: Weitzel, Wolfgang
(86) Internationale Anmeldenummer: PCT/EP2005/001304
(87) Internationale Veröffentlichungsnummer: WO 2005/109610

(56) Entgegenhaltungen:
- EP-A- 0 513 575
- EP-A- 1 191 663
- EP-A- 1 267 471
- DE-A1- 10 031 349
- DE-A1- 19 927 082

## Beschreibung

Die Erfindung betrifft eine Statorbaueinheit, insbesondere für eine Synchronmaschine mit transversaler Flussführung, im Einzelnen mit den Merkmalen aus dem Oberbegriff des Anspruchs 1.

Synchronmaschinen mit transversaler Flussführung, insbesondere Transversalflussmaschinen, sind in verschiedensten Ausführungen aus einer Vielzahl von Druckschriften vorbekannt. Diese weisen eine permanente Magneterregung im Rotor auf. Bei einer Mehrzahl der bekannten Synchronmaschinen mit transversaler Flussführung sind dabei am Rotor entlang des Umfanges Permanentmagnete in einer Anzahl entsprechend der Polzahl der Maschine angeordnet. Die Magnete sind dazu im Rotor in Umfangsrichtung magnetisiert, wobei zwischen den Magneten entsprechende Flussleitstücke angeordnet sind. Dem Rotor ist eine Statorbaueinheit unter Bildung eines Luftspaltes zugeordnet. Die Statorbaueinheit der Maschine umfasst sogenannte Schnittbandkerne aus magnetisch gut leitendem Material, beispielsweise Blechpaketen aus Eisen. Über diese wird der magnetische Fluss geführt. Auf der am Luftspalt gegenüberliegenden Seite jedes Pols befindet sich ein Permanentmagnet am Rotor. Je nach Ausführungsform der Maschine werden die magnetischen Feldlinien entweder über Rückschlussringe, welche eine Reihe von Permanentmagneten magnetisch kurzschließen oder sogenannte Flussleitstücke aus magnetisch gut leitfähigem Material, welche zwischen den Permanentmagneten angeordnet sind, geführt. Bei letztgenannter Lösung werden die in Umfangsrichtung abwechselnd magnetisierten Permanentmagnete tangential durchflossen. Mit dieser Art der Maschine ist es möglich, gegenüber herkömmlichen Maschinen gleichen Bauvolumens eine wesentlich höhere Drehmomentdichte aufgrund der Möglichkeit einer Erhöhung des Drehmomentes durch Erhöhung der Polzahl zu erzielen. Ein wesentlicher Nachteil der bekannten Maschinen besteht jedoch darin, dass diese aus einer Vielzahl von Einzelteilen bestehen, so dass die Gesamtmaschine durch einen hohen konstruktiven und fertigungstechnischen Aufwand charakterisiert ist.

Eine gattungsgemäße Ausführung einer Transversalflussmaschine, bei welcher der Schwerpunkt auf einer einfachen und kostengünstigen Fertigung liegt, ist aus der Druckschrift EP 1 005 136 A1 vorbekannt. Bei dieser sind im Rotor in Umfangsrichtung im Wechsel Permanentmagnete und Flussleitstücke montiert. Die Magnete sind in Umfangsrichtung und mit alternierender Polarität magnetisiert. Die dem Rotor zugeordnete Statorbaueinheit umfasst eine Vielzahl einzelner weichmagnetischer Statorelemente, welche transversal zur Drehrichtung angeordnet sind. Die Statorelemente sind in Form von U-Jochen ausgeführt. Die U-Joche sind dabei in Drehrichtung versetzt orientiert, so dass aufgrund der magnetischen Potentialdifferenz ein drehmomentbildender magnetischer Fluss erzeugt wird. Die Versetzung der Schenkel der U-förmigen Statorelemente gegenüber einer zur Drehachse der Maschine parallelen Richtung erfolgt um eine Polteilung.

Gleiche Eigenschaften können erreicht werden, wenn anstelle der Statorelemente die Flussleitstücke schräg ausgebildet sind. Das Schließen der Magnetkreise erfolgt dann im Rotor über entsprechende Flussleitstücke, wodurch auf separate Rückschlusselemente am Stator verzichtet werden kann. Dabei werden die Flussleitstücke des Rotors in allen drei Dimensionen vom magnetischen Fluss durchsetzt. Zur Vermeidung von Wirbelstromverlusten sind diese vorzugsweise aus verpresstem weichmagnetischem Pulver mit isotropen Eigenschaften hergestellt. Für die magnetisch leitfähigen Statorelemente werden in dieser Druckschrift mehrere Bauformen vorgeschlagen. Bezüglich der Verlustbildung durch Wirbelströme bieten Pressteile aus weichmagnetischem Pulverwerkstoff jedoch die besten Eigenschaften. Bei Verwendung dieses Werkstoffes können die Statorelemente sowohl verschwenkt als auch nicht verschwenkt ausgeführt werden. Nachteilig erweist sich jedoch die gegenüber ferromagnetischem Material wesentlich schlechtere magnetische Leitfähigkeit. Auch ist die magnetische Belastung der Statorelemente gerade im Zahnbereich sehr hoch, da dort erhöhte Ummagnetisierungsverluste zu erwarten sind. Es ist fraglich, ob dieser mit den pulververpressten Zähnen über einen längeren Zeitraum standgehalten werden kann. Des weiteren gestaltet sich eine kraftschlüssige Verbindung der Statorelemente mit dem Gehäuse aufgrund der Ausbildung der Statorbaueinheit aus einer Vielzahl von einzelnen Statorelementen sehr aufwendig. In einer weiteren Lösung gemäß dieser Druckschrift wird daher auch vorgeschlagen, die Statorelemente als schnittbandkemähnliche Gebilde auszuführen. Dabei wird kornorientiertes Blech verwendet, wobei die Blechung entlang dem Verlauf des magnetischen Flusses ausgerichtet ist. Bezüglich der magnetischen Leitfähigkeit und der Verlustbildung weisen derartige Statorelemente zwar gute Eigenschaften auf. Diese sind jedoch in der Herstellung vergleichsweise aufwendig und damit sehr kostspielig. Mit einer derartigen Ausführung ist außerdem die Herstellung von in Umfangsrichtung verschwenkten Statorelementen, insbesondere den zahnbildenden Schenkeln, nicht ohne weiteres möglich.

Der dritte Lösungsansatz gemäß dem Stand der Technik besteht darin, die Statorelemente aus gestanzten Blechsegmenten zusammenzufügen. Die Blechung erfolgt dabei in Umfangsrichtung. Bei dem die Spule umschließenden Statorfluss verhindert die Blechung weitgehend die Wirbelstrombildung. Da der luftspaltnahe kraftbildende Fluss an den Polkanten jedoch senkrecht zur Blechung eintritt, ist in diesem Bereich mit nicht unerheblichen Wirbelstromverlusten zu rechnen. Auch diese Lösung gestaltet sich bezüglich der Anbindung der einzelnen Statorelemente an das Gehäuse sehr aufwendig.

Aus der Druckschrift DE 100 47 675 A1 ist eine Statorbaueinheit vorbekannt, bei welcher die einer Phase zuordenbare Statoreinheit aus einem ringförmigem pulvermetallurgisch hergestellten Jochelement besteht, welches aus einem weichmagnetischen Pulververbundwerkstoff besteht und zwei mit diesem verbundene offene oder geschlossene Zahnringe aufweist. Die Statorbaueinheit entspricht einer Kombination aus Zahnringen und einer inneren Jochstruktur. Die Zahnringe werden aus ferromagnetischen Werkstoffen gefertigt und können daher auch als Weicheiseneinheiten bezeichnet werden. Diese sind bezüglich der Anzahl ihrer einzelnen Zähne beziehungsweise Zahnelemente und der äußeren Abmessungen identisch ausgeführt und in Umfangsrichtung vorzugsweise um eine Polteilung zueinander versetzt am ringförmigen Jochelement angeordnet. Auch bei dieser Ausführung entstehen aufgrund der elektromagnetischen Eigenschaften des Pulververbundwerkstoffes bei gleichem Bauraum gegenüber der Verwendung von ferromagnetischem Material deutlich höhere Verluste. Dies wird insbesondere bei Vergleichen zwischen Ausführungen mit U-förmigen Statorelementen in Form von Schnittbandkernen und Ausführung mit Jochringen aus Pulver ersichtlich.

Das Dokument DE 100 31 349 A1 zeigt eine Statorbaueinheit einer Transversalflussmaschine mit den Merkmalen, die im Oberbegriff von Anspruch 1 zusammengefasst sind.

Der Erfindung liegt daher die Aufgabe zugrunde, eine Statorbaueinheit der eingangs genannten Art derart weiterzuentwickeln, dass zum einen die mechanisch bewährte Konstruktion in den Bereichen der Kraftübertragung belassen wird und diese im gleichen Bauraum mit einfachen Konstruktionselementen mit bester magnetischer Leitfähigkeit und zur Vermeidung von übermäßiger magnetischer Sättigung mit ausreichendem Querschnitt versehen untergebracht wird. Die bisher im Pulver-Jochring integrierte Kühlung muss mit effizienterer Wirkung auch noch mit im gleichen Bauraum realisiert werden können.

Die erfindungsgemäße Lösung ist durch die Merkmale des Anspruchs 1 charakterisiert. Vorteilhafte Ausgestaltungen sind in den Unteransprüchen beschrieben.

Die Statorbaueinheit für eine Synchronmaschine mit transversaler Flussführung, insbesondere eine Transversalflussmaschine mit mindestens einer Phase, umfasst wenigstens eine der einzelnen Phase zugeordnete, eine Ankerwicklung tragende Statoreinheit, welche in Einbaulage einem Rotor unter Bildung eines bezogen auf die Rotationsachse des Rotors der Synchronmaschine in radialer Richtung angeordneten Luftspaltes zugeordnet ist. Die Statoreinheit umfasst zwei Reihen aus in Umfangsrichtung hintereinander angeordneten Zähnen bzw. Zahnelementen, die über eine Jocheinheit miteinander verbunden sind, wobei die Verbindung den Magnetfluss leitend erfolgt. Die Jocheinheit ist ringförmig ausgeführt und umfasst in Umfangsrichtung hintereinander gestapelte Elektrobleche. Die einzelnen Elektrobleche sind zu Elektroblechpaketen zusammengefasst, wobei die Pakete als Einheit oder durch die Aneinanderreihung der einzelnen Bleche montierbar sein können. Jedes Elektroblechpaket umfasst dabei wenigstens zwei in Umfangsrichtung hintereinander angeordnete Elektrobleche. Die einzelnen Elektroblechpakete sind in Umfangsrichtung hintereinander unter Bildung von Zwischenräumen beabstandet angeordnet. In den Zwischenräumen zwischen zwei einander in Umfangsrichtung benachbart angeordneten Elektroblechpaketen sind Abstandshalterelemente angeordnet. Um den Raum optimal zu nutzen, gibt es erfindungsgemäss zwei unterschiedliche radiale Blechhöhen und auch zwei unterschiedliche Stapelhöhen. Die Elektrobleche sind dabei aus kornorientiertem Elektroblech ausgeführt. Dabei sind die Mehrzahl der die magnetische Hauptrichtung beschreibenden Richtungsvektoren wenigstens mit einer Richtungskomponente in axialer Richtung, ausgerichtet, das heißt, weisen von einem Zahnring beziehungsweise Zahnelement einer Reihe zur jeweils anderen Reihe von in Umfangsrichtung hintereinander angeordneten Zahnelementen. Damit wird eine Führung des magnetischen Flusses von einem Zahnelement über die Jocheinheit zur zweiten Reihe von in Umfangsrichtung hintereinander angeordneten Zahnelementen realisiert. Die erfindungsgemäße Lösung ermöglicht es im flußleitenden Bereich ein Material mit idealen Eigenschaften wie beste magnetische Leitfähigkeit und hohe Sättigungsinduktion bei geringsten Ummagnetisierungsverlusten einzusetzen.

Um die Eigenschaften des Bleches voll zu nutzen, muss der Raum zwischen der Rotorwelle und der nicht zu verändernden Kraftausleitung am Innenstator optimal genutzt werden, insbesondere inklusive einer verbesserten Kühlung, vorzugsweise Wasserkühlung. Um den magnetischen Fluss transversal zwischen den beiden Reihen von in Umfangsrichtung angeordneten Zahnelementen zu führen, werden die Elektrobleche quer zur Achsrichtung gestapelt. Vorzugsweise sind in einer Statoreinheit wenigstens zwei unterschiedliche Blechpakettypen vorgesehen, wobei diese jeweils wechselweise in Umfangsrichtung hintereinander angeordnet werden. Ferner sind die einzelnen Elektroblechpakete dann auf unterschiedliche Stapelhöhen angeordnet. Die sich zwischen den zwei einander in Umfangsrichtung benachbarten Paketen ergebenden Zwischenräume sind kuchenstückförmig. In die kuchenstückförmigen Zwischenräume sind die Abstandshalterelemente integriert. Diese fixieren die einzelnen Elektroblechpakete in Umfangsrichtung in ihrer Lage zueinander. Die Anordnung der Elektroblechpakete in Umfangsrichtung beziehungsweise in radialer Richtung erfolgt dabei bezogen auf die in radialer Richtung von der Rotationsachse weggerichtete Fläche auf einem Durchmesser, wobei die zur Rotationsachse hinweisenden Flächen der einzelnen Blechpakettypen auf unterschiedlichen Durchmessern liegen. Dadurch wird im Bereich der zur Rotationsachse weisenden Flächen in Umfangsrichtung eine Fixierung der Lage der Blechpakete mit geringem Abstand oder auch Berührung der einzelnen Blechpakete in diesem Bereich gewährleistet, während diese in radialer Richtung nach außen gerichtet unter Bildung der Zwischenräume auseinander klaffen.

Die Abstandshalterelemente selbst können unterschiedlich ausgestaltet sein. Diese sind vorzugsweise in Form von Aluminiumelementen, insbesondere Aluminiumfingern, d.h. im Querschnitt kuchenstückförmigen oder viereckigen Elementen mit eingegossenen oder gebohrten Kühlkanälen ausgeführt. Vorzugsweise werden jedoch Ausführungen der Abstandshalter gewählt, die möglichst über einen großen Bereich in radialer Richtung einen Flächenkontakt mit den Blechpaketen ermöglichen. Die integrierten Kühlkanäle können unterschiedlich ausgestaltet sein. Diese erstrecken sich entweder über die axiale Erstreckung der Abstandshalterelemente. In diesem Fall sind an den voneinander wegweisenden Stirnseiten der Abstandshalterelemente in axialer Richtung entsprechende Anschlüsse vorgesehen. Im anderen Fall erfolgt die Führung mindestens eines derartigen Kühlkanals mit Rückführung in einem Abstandshalterelement, wobei die Anschlüsse an nur einer Stirnseite vorgesehen sind. Dadurch wird es möglich, die Wicklung und die beiden Zahnringe indirekt und die Blechpakete selbst zu kühlen, wobei die Wärmeleitbereiche relativ klein bzw. kurz gehalten werden und somit eine sehr effektive Kühlung gewährleistet werden kann.

Zur Verbesserung der Kühlwirkung werden vorzugsweise die notwendigen Fügespalte der Einzelelemente beim Tränken der Wicklung mit Tränkharz ausgefüllt. Die Blechpakete erhalten dadurch die erforderliche mechanische Festigkeit in diesem Elementverbund. Die erfindungsgemäße Lösung bietet den Vorteil bei gleichem anliegenden Strom höhere Momente übertragen zu können, sowie reduzierte Verluste aufzuweisen. Eine elektrische Maschine mit derartig gestalteter Statoreinheit ist auch durch eine höhere Dauerleistung charakterisiert, die durch die verbesserte Kühlung nochmals erhöht werden kann.

Die Anordnung und Fixierung der einzelnen Blechpakete der Jocheinheit kann unterschiedlich erfolgen. Im einfachsten Fall werden diese an den Zahnringen und einem ringförmigen, zwischen den Zahnringen angeordneten und die Jocheinheit in Umfangsrichtung umschließenden Zwischenelement, insbesondere im Bereich der Innendurchmesser dieser Elemente befestigt. Die Befestigung kann kraft - oder formschlüssig erfolgen. Vorzugsweise sind an den Innenumfängen der Elemente entsprechend dafür ausgestaltete Schlitze vorgesehen. Das Zwischenelement umschließt die Jocheinheit in radialer Richtung und wenigstens teilweise, vorzugsweise vollständig in Umfangsrichtung und bildet die Auflagefläche für die Ankerwicklung. Denkbar ist auch die Nutzung dieses ringförmigen Elementes zur Fixierung der Lage der Zahnringe in axialer Richtung.

Die einzelnen Blechpakete können auch zwischen den Reihen aus in Umfangsrichtung hintereinander angeordneten Zahnelementen, die vorzugsweise aus einseitig unterbrochenen Zahnringen bestehen, und zusätzlich einem ringförmigen Element eingeklemmt werden. Dies gilt auch für das Zwischenelement.

Im einfachsten Fall ist wenigstens ein ringförmiges Element vorgesehen, das sich in axialer Richtung über wenigstens einen Teil der axialen Erstreckung der Statorbaueinheit erstreckt, vorzugsweise über die gesamte Erstreckung und an dem über so genannte Fixierungsmittel in radialer Richtung in Form von Stiften oder ähnlichen unterschiedliche Höhen ausgleichenden Elementen die Blechpakete in radialer Richtung abgestützt werden. Dadurch wird eine kraftschlüssige Verbindung, beispielsweise eine Pressverbindung, realisiert, die die Lage der einzelnen Elemente - Zahnelement sowie Jocheinheit - in axialer und radialer Richtung zueinander weitestgehend fixiert. Die axiale Fixierung der Jocheinheit und der Zahnelemente erfolgt vorzugsweise über entsprechende Befestigungsmittel, beispielsweise in Form von Spannschrauben, die sich durch den gesamten Verbund in axialer Richtung erstrecken und die Einzelelemente Zahnring, Jocheinheit und Zwischenelement gegeneinander verspannen.

Die erfindungsgemäße Lösung ist nachfolgend anhand von Figuren erläutert. Darin ist im Einzelnen Folgendes dargestellt:

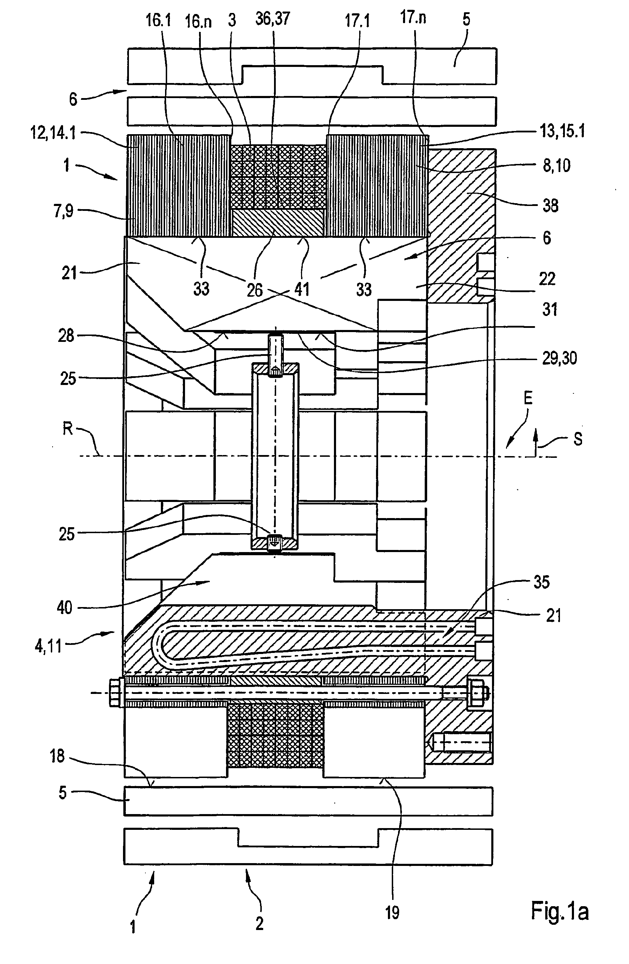

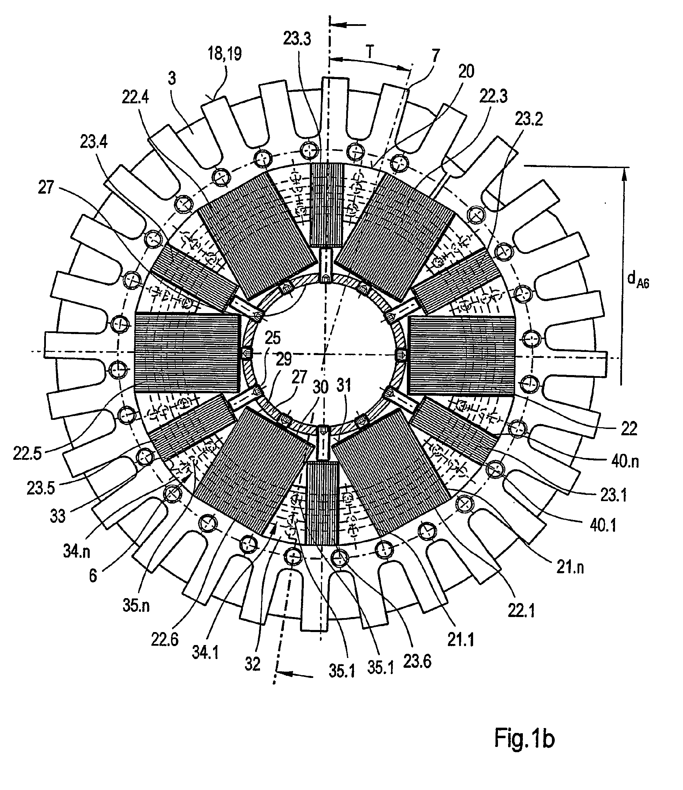

- Figur 1: verdeutlicht in schematisch vereinfachter Darstellung anhand eines Ausschnittes aus einem Axialschnitt einer Statoreinheit einer Synchronmaschine mit transversaler Flussmaschine den Grundaufbau einer eine Phase zugeordneten und eine Ankerwicklung tragenden Statoreinheit;
- Figur 1 b: verdeutlicht eine Ansicht gemäß Figur 1 a.

Die Figur 1a verdeutlicht in schematisch vereinfachter Darstellung anhand eines Ausschnittes aus einem Axialschnitt einer Statorbaueinheit 1 einer Synchronmaschine 2 mit transversaler Flussführung, insbesondere Transversalflussmaschine, den Grundaufbau einer erfindungsgemäß gestalteten und eine Ankerwicklung 3 tragenden Statoreinheit 4. Die Statoreinheit 4 stellt dabei ein Element der Statorbaueinheit 1 dar. Die Statoreinheit 4 ist in einem, hier im einzelnen nicht dargestellten Statorgehäuse, angeordnet. In diesem Gehäuse ist ein Rotor der Synchronmaschine 2 mit transversaler Flussführung gelagert. Die Statoreinheit 4 ist dem Rotor, insbesondere einer Phase unter Bildung eines Luftspaltes 6 zugeordnet. Im dargestellten Fall ist der Rotor 5 nur angedeutet und als Außenläufer ausgeführt, das heißt die Statorbaueinheit 1 umfasst wenigstens einen Innenstator und vorzugsweise auch einen Außenstator. Die Statoreinheit 4 ist Bestandteil des Innenstators. Die Statoreinheit 4 beschreibt in einer Ansicht im Axialschnitt der elektrischen Maschine gemäß Figur 1a bei Projizierung in eine durch die Rotationsachse R des Rotors und einer Senkrechten S in vertikaler Richtung zu dieser beschreibbaren Ebene E eine im wesentlichen U-förmig ausgebildete Querschnittsfläche. Die Statoreinheit 4 umfasst zu diesem Zweck eine ringförmige Jocheinheit 6, welche die Funktion eines Rückschlusselementes übernimmt und das mit zwei als Zahnringe 7 und 8 ausgebildeten Weicheiseneinheiten 9 beziehungsweise 10 eine bauliche Einheit 11 bildet. Der Begriff Weicheiseneinheit steht dabei für Elemente aus weichmagnetischen Werkstoffen. Die Zahnringe 7 und 8 sind derart aufgebaut, dass diese im Querschnitt betrachtet zwei Schenkel 12 und 13 der Statoreinheit 4 bilden. In Funktionslage stehen diese dem Permanentmagneten des Rotors 5 gegenüber. Die Schenkel werden von in Umfangsrichtung hintereinander angeordneten Zähnen 14.1 bis 14.n beziehungsweise 15.1 bis 15.n gebildet. Dabei können die einzelnen Zähne 14.1 bis 14.n beziehungsweise 15.1 bis 15.n als einzelnen Zahnelemente mit einem ringförmigen Element zur baulichen Einheit der Zahnringe 7 und 8 zusammengefasst werden oder aber von mehreren quer zur Achsrichtung gestapelten Blechringen. Zwischen den Zahnringen 7 und 8 befindet sich an drei Seiten umschlossen die in Umfangsrichtung verlaufende Ankerwicklung 3. Die einzelnen Zähne 14.1 bis 14.n beziehungsweise 15.1 bis 15.n der Zahnringe 7 und 8 sind in Umfangsrichtung mit einer Teilung im bestimmten Verhältnis zur Polteilung T am Rotor 5 voneinander beabstandet angeordnet. Zur Realisierung einer einfachen Montage sind die Weicheiseneinheiten 9 und 10 in Form von Zahnringen 7 und 8 ausgeführt. Vorzugsweise werden die einzelnen Zahnringe 7 und 8 als axial geschichtete Blechpakete ausgeführt. Die Schichtung erfolgt dabei in Richtung der Rotationsachse R des Rotors bzw. quer zur Umfangsrichtung. Jeder Zahnring 7 beziehungsweise 8 besteht dazu aus einer Mehrzahl von in axialer Richtung nebeneinander angeordneten ringförmigen Elementen in Form von Blechplatten 16.1 bis 16.n beziehungsweise 17.1 bis 17.n. Die Beabstandung der einzelnen Zähne 14.1 bis 14.n beziehungsweise 15.1 bis 15.n an den Blechplatten 16.1 bis 16.n beziehungsweise 17.1 bis 17.n mit einer bestimmten Teilung T zueinander wird durch Ausführung beziehungsweise Ausbildung randoffener Schlitze an den Blechringen realisiert. Diese erstrecken sich dabei bei Ausbildung der Statoreinheit 4 als ein Element der Statorbaueinheit 1 in Form des Innenstators vom Bereich des Außenumfanges 18 beziehungsweise 19 der Blechplatten 16.1 bis 16.n beziehungsweise 17.1 bis 17.n in radialer Richtung zur zum Rotor 5 hinweisenden Fläche 20 der Jocheinheit 6. Die durch die randoffenen Schlitze gebildeten Öffnungen weisen zum Luftspalt beziehungsweise Rotor 5 hin. Die Zahnringe 7 beziehungsweise 8 sind in Umfangsrichtung wenigstens einmal unterteilt ausgeführt. Vorzugsweise besteht ein derartiger Zahnring 7 beziehungsweise 8 aus einer Mehrzahl nebeneinander gestapelter und in Umfangsrichtung einteilig ausgeführter Blechringelemente. Denkbar ist es jedoch auch, den einzelnen Zahnring 7 beziehungsweise 8 aus einer Mehrzahl von in Umfangsrichtung einander benachbart angeordneten Zahnringsegmenten zu bilden.

Erfindungsgemäß umfasst die ringförmige Jocheinheit 6 parallel zur Rotationsachse R bzw. quer zur Achsrichtung angeordnete Elektrobleche. Die Elektrobleche erstrecken sich jeweils in axialer Richtung und sind in Umfangsrichtung einander benachbart bzw. hintereinander angeordnet. Diese sind in Figur 1a mit 21 und 40 und in Figur 1b mit 21.1 bis 21.n bzw. 40.1 bis 40.n bezeichnet. Vorzugsweise handelt es sich dabei um kornorientiertes Elektroblech, wobei der Hauptteil der die magnetische Hauptrichtung charakterisierenden Richtungsvektoren jeweils wenigstens durch eine in axialer Richtung ausgerichtete Richtungskomponente beschreibbar sind. Dies bedeutet, dass aufgrund der Gitterstruktur eine optimale magnetische Leitfähigkeit in transversaler Richtung gegeben ist. Vorzugsweise werden zur optimalen Raumausnutzung die Elektrobleche in Blechpaketen 22.1 bis 22.n und 23.1 bis 23.n zusammengefasst, die sich in Einbaulage in radialer Richtung durch unterschiedliche Höhen auszeichnen. Vorzugsweise weisen die einzelnen Blechpakete 22.1 bis 22.n und 23.1 bis 23.n unterschiedliche Stärken, das heißt Dicken in Umfangsrichtung auf. Die Anordnung der Blechpakete unterschiedlicher Höhe alternierend zueinander erfolgt derart, dass diese vorzugsweise einen gemeinsamen Außendurchmesser d_{A6} aufweisen. Die unterschiedlichen Höhen werden dann über den Innenumfang ausgeglichen. Dazu ist ein ringförmiges Element 27, vorzugsweise ein hohlzylindrisches Element vorgesehen, an welchem sich über entsprechende Abstützmittel 25 die einzelnen Blechpakete 22.1 bis 22.n und 23.1 bis 23.n abstützen, wobei die Blechpakete in ihrer Lage in radialer Richtung über die Abstützmittel 25 und die Zahnringe 6 und 7 fixiert werden. Ferner umfasst die ringförmige Jocheinheit 6 einen zwischen den Zahnringen 7 und 8 angeordneten Zwischenring 26 aus vorzugsweise Aluminium. Dieser ist am Innenumfang 41 geschlitzt ausgeführt, das heißt weist randoffene Schlitze auf, die quer zur Achsrichtung ausgebildet sind, das heißt parallel zur Rotationsachse des Rotors beziehungsweise der Symmetrieachse des Innenstators verlaufen. Diese randoffenen Schlitze übernehmen eine Führungsfunktion. In diese werden die Blechpakete eingesteckt. Jedes Blechpaket 22.1, 22.n, 23.1, 23.n ist ferner in radialer Richtung im Bereich des eigenen Innendurchmessers beziehungsweise der von der Ankerwicklung 3 weggewandten Stirnfläche 28 vorzugsweise über Mittel 29 zur Fixierung der Lage der einzelnen Elektrobleche als Paket fixiert. Diese Mittel 29 sind im einfachsten Fall als Blechelement 30 ausgebildet, wobei dieses zusätzlich ebenfalls geschlitzt ausgeführt sein kann und somit für die einzelne Elektrobleche eine Führung bildet. Das Blechelement 30 dient ferner als Auflagefläche 31 für die Abstützmittel 25, um die Blechpakete 22.1 bis 22.n und 23.1 bis 23.n in ihrer Lage in radialer Richtung zu halten. Durch alternierendes Befestigen der hohen und niedrigen Blechpakete 22.1 bis 22.n und 23.1 bis 23.n am Innendurchmesser 33 der Zahnringe 7 und 8 und des geschlitzten Aluminiumringes in Form des Zwischenringes 26 entstehen kuchenstückförmige Zwischenräume 34.1 bis 34.n, die durch Abstandshalter in Form von Aluminiumfingern 32 ausgefüllt werden. Die Aluminiumfinger 32 weisen vorzugsweise beim Umformvorgang eingegossene oder durch nachträgliche Bearbeitung beziehungsweise Bohrung gefertigte Kühlkanäle 35.1 bis 35.n auf. Über diese werden dabei die Wicklung 3, die beiden Zahnringe 7 und 8 sowie die Blechpakete 22.1 bis 22.n und 23.1 bis 23.n gekühlt. In einer besonders vorteilhaften Ausführung werden zur Verbesserung der Kühlwirkung die notwendigen Fügespalte beim Tränken der Wicklung 3 mit einem Tränkharz ausgefüllt. Die Blechpakete 22.1 bis 22.n und 23.1 bis 23.n erhalten dadurch die erforderliche mechanische Festigkeit in diesem Elementverbund.

Für die Kopplung zwischen den Zahnringen 7 und 8 und der Jocheinheit 6, welche im Funktionszustand als sogenannter Rückschlussring fungiert und mechanisch die Funktion eines Tragelementes ausführt, bestehen eine Vielzahl von Möglichkeiten. Vorzugsweise wird bei Ausführung der Zahnringe 7 und 8 aus Weicheisenblechpaketen in geschlitzter Ausführung eine formschlüssige oder je nach Auslegung auch kraftschlüssige Kopplung zwischen der ringförmigen Jocheinheit 6 und den einzelnen Blechplatten der Zahnelemente der Zahnringe 7 und 8 vorgenommen. Dies kann im einfachsten Fall durch eine Pressverbindung erfolgen. In diesem Fall sind die einzelnen Elemente der Statoreinheit 4, ringförmige Jocheinheit 6 und die Zahnringe 7 und 8, derart hinsichtlich ihrer Abmessung auszulegen, dass diese eine bestimmte Pressung miteinander einnehmen. Im einzelnen betrifft das wenigstens die miteinander in Wirkverbindung tretenden Flächen oder Linienbereiche, welche an der zum Rotor 5 ausgerichteten Stirnseite der Blechpakete 22.1 bis 22.n und 23.1 bis 23.n ausgebildet sind und die mit diesen in Wirkverbindung tretenden Flächenbereiche an der zur Jocheinheit 6 hingerichteten Stirnseite der Zahnringe 7 und 8.

Andere Möglichkeiten der Kopplung zwischen den Zahnringen 7 und 8 und der Jocheinheit 6 in radialer und axialer Richtung bestehen in formschlüssigen Verbindungen. Dazu ist es beispielsweise denkbar, die Blechpakete der Zahnringe 7 und 8 geschlitzt auszuführen, wobei in diesen Schlitzen die einzelnen Bleche der Blechpakete 22.1 bis 22.n und 23.1 und 23.n der Jocheinheit geführt werden.

Im einzelnen sind eine Vielzahl von Ausführungsmöglichkeiten denkbar, auf welche jedoch hier im Einzelfall nicht eingegangen werden soll.

Die Ankerwicklung 3, welche zwischen den beiden von den Zahnringen 7 und 8 gebildeten Schenkeln 12 und 13 angeordnet ist, wird direkt auf dem ringförmigen Jochelement 6 bzw. dem dieses umschließenden ringförmigen Element 26 aufgewickelt und in axialer Richtung von Teilflächen der zueinander weisenden Stirnseiten der Zahnringe 7 und 8 fixiert. Die Fixierung in radialer Richtung ergibt sich bei Ausführung der Statorbaueinheit 1 als Innenstator und wicklungstragende Statoreinheit 4 durch die beim Wickeln erzeugte Straffheit. Die Ankerwicklung 3 liegt dabei direkt auf einer Teilfläche 36 der zum Rotor 5 hin ausgerichteten Fläche 37 der Jocheinheit 6, vorzugsweise dem Zwischenring 26 auf.

Die Statoreinheit 4, welche aus der ringförmigen Jocheinheit 6, dem Zwischenring 26 sowie den Zahnringen 7 und 8 und der Ankerwicklung 3 besteht, kann als komplett vormontierte Baueinheit bereitgestellt werden. Vorzugsweise sind zusätzliche Verbindungselemente zum Verspannen der Statoreinheit 4 in axialer Richtung vorgesehen. In diesem Fall ist stellvertretend ein Verbindungselement dargestellt. Zur Realisierung der Verspannung in Axialrichtung der Statoreinheit 4 sind ferner Endringe, hier wenigstens ein Endring 38 vorgesehen, welcher einen Anschlag für wenigstens einen der Zahnringe 7 und 8 in axialer Richtung bildet. Das Verbindungselement verspannt dabei die Einheit aus Zahnringen 7, 8, Zwischenring 26 und Jocheinheit 6 gegenüber dem Endring 38, bei Ausbildung mit beidseitig zugeordneten Endringen beide Endringe gegeneinander. In der Ausführung gemäß Figur 1a ist lediglich ein Endring 38 vorgesehen. Das Verbindungselement erstreckt sich vorzugsweise durch die Zahnringe 7 und 8 sowie das mit der Jocheinheit gekoppelte Zwischenelement 26. Die axiale Verspannung erfolgt mit der dem Moment am Innenstator beziehungsweise der Statoreinheit 4 erforderlichen Vorspannung.

Die Figur 1b verdeutlicht anhand einer Seitenansicht die Ausgestaltung der erfindungsgemäßen Jocheinheit 6. Daraus ist ersichtlich, dass die Zahnringe 7 und 8 in Umfangsrichtung zur Vermeidung von Ringströmen unterbrochen ausgeführt sind. Denkbar wäre auch eine Unterteilung der Zahnringe 7, 8 in mehrere Einzelsegmente.

Die erfindungsgemäße Lösung ist nicht auf die Ausführung gemäß der Figuren 1a und 1b beschränkt. Denkbar ist die Anwendung der Ausführung der Statoreinheit 4 in Synchronmaschinen mit transversaler Flussführung mit unterschiedlicher Anzahl von Phasen. Bezüglich der konkreten Ausgestaltung der Einzelelemente, insbesondere der Jocheinheit 6 und der Zahnringe 7, 8, sind Modifikationen von den in den Figuren 1a und 1b beschriebenen Ausführungen möglich. Die Erfindung schließt dabei Ausführungen von Statoreinheiten ein, bei welchen die Einzelelemente ringförmig ausgestaltet sind.

Auch bezüglich der Ausgestaltung der Kühlkanäle bestehen eine Mehrzahl von Möglichkeiten. Diese können dabei wie in der Figur 1a dargestellt durch den gesamten Abstandshalter beispielhaft in Form des Aluminiumfingers 32 geführt werden, wobei diese sich mit Hin- und Rückführung durch diesen erstrecken und die Anschlüsse für den Zulauf und den Ablauf an der gleichen Stirnseite enden. In strichpunktierter Ausführung wird der Verlauf eines Kühlkanals verdeutlicht, der sich von einer Stirnseite zur nächsten Stirnseite erstreckt.

### Bezugszeichenliste

- 1: Statorbaueinheit
- 2: Synchronmaschine mit transversaler Flussführung
- 3: Ankerwicklung
- 4: Statoreinheit
- 5: Rotor
- 6: ringförmige Jocheinheit
- 7: Zahnring
- 8: Zahnring
- 9: Weicheiseneinheit
- 10: Weicheiseneinheit
- 11: bauliche Einheit
- 12: Schenkel
- 13: Schenkel
- 14.1, 14.n: Zahn
- 15.1, 15.n: Zahn
- 16.1,16.n: Blechplatte
- 17.1, 17.n: Blechplatte
- 18: Außenumfang
- 19: Außenumfang
- 20: Fläche
- 21.1, 21.n: Elektroblech
- 22.1, 22.n: Blechpaket
- 23.1, 23.n: Blechpaket
- 24: ringförmiges Element
- 25: Abstützmittel
- 26: Zwischenelement
- 27: ringförmiges Element
- 28: Stirnfläche
- 29: Mittel zur Fixierung der Lage der einzelnen Elektrobleche
- 30: Blechelement
- 31: Anlagefläche
- 32: Aluminiumfinger
- 33: Innendurchmesser
- 34.1, 34.n: kuchenstückförmige Zwischenräume
- 35.1, 35.n: Kühlkanäle
- 36: Teilfläche
- 37: Fläche
- 38: Endring
- 40.1, 40.n: Elektroblech
- 41: Innenumfang

## Patentansprüche

1. Statorbaueinheit (1) für eine Synchronmaschine mit transversaler Flussführung, insbesondere eine Transversalflussmaschine mit mindestens einer Phase;
1.1 mit einer der einzelnen Phase zugeordneten, eine Ankerwicklung (3) tragenden Statoreinheit (4), welche in Einbaulage einem Rotor (5) unter Bildung eines bezogen auf die Rotationsachse (R) des Rotors der Synchronmaschine (2) in radialer Richtung angeordneten Luftspaltes zugeordnet ist;
1.2 die Statoreinheit (4) umfasst zwei Reihen aus in Umfangsrichtung hintereinander angeordneten Zähnen (14.1 bis 14.n, 15.1 bis 15.n), die über eine Jocheinheit (6) den Magnetfluss leitend miteinander verbunden sind;
1.3 die Jocheinheit (6) ist ringförmig ausgeführt;
1.4 die Jocheinheit (6) umfasst in Umfangsrichtung hintereinander gestapelte Elektrobleche (21.1 bis 21.n, 40.1 bis 40.n).
1.5 die einzelnen Elektrobleche (21.1 bis 21.n, 40.1 bis 40.n) sind zu Elektroblechpaketen (22.1 bis 22.n, 23.1 bis 23.n), umfassend wenigstens jeweils zwei in Umfangsrichtung hintereinander angeordnete Elektrobleche (21.1 bis 21.n, 40.1 bis 40.n), zusammengefasst;
1.6 die einzelnen Elektroblechpakete (21.1 bis 21.n, 22.1 bis 22.n) sind in Umfangsrichtung hintereinander unter Bildung von Zwischenräumen (34.1 bis 34.n) beabstandet angeordnet;
1.7 in den Zwischenräumen (34.1 bis 34.n) zwischen zwei einander in Umfangsrichtung benachbart angeordneten Elektroblechpaketen (21.1 bis 21.n, 22.1 bis 22.n) sind Abstandshalterelemente (32) angeordnet, **gekennzeichnet durch** die folgenden Merkmale:
1.8 die einzelnen in Umfangsrichtung einander benachbart angeordneten Blechpakete (22.1 bis 22.n, 23.1 bis 23.n) weisen in radialer Richtung in Einbaulage betrachtet, unterschiedliche Blechhöhen auf.

2. Statorbaueinheit (1) nach Anspruch 1, **dadurch gekennzeichnet, dass** die Elektrobleche (21.1 bis 21.n, 40.1 bis 40.n) aus kornorientiertem Elektroblech bestehen, wobei die Mehrzahl der die magnetische Hauptrichtung beschreibenden Richtungsvektoren wenigstens mit einer Richtungskomponente in axialer Richtung von einer Reihe (7, 8) der Zahnelemente (14.1 bis 14.n, 15.1 bis 15.n) zur anderen Reihe (8, 7) Zahnelemente (14.1 bis 14.n, 15.1 bis 15.n) weist.

3. Statorbaueinheit (1) nach einem der Ansprüche 1 oder 2, **dadurch gekennzeichnet, dass** die in radialer Richtung zur Rotationsachse (R) weisenden Innenumfangsflächen zweier in Umfangsrichtung einander benachbart angeordneter Blechpakete (22.1 bis 22.n, 23.1 bis 23.n) jeweils auf unterschiedlichen Durchmessern liegen.

4. Statorbaueinheit (1) nach einem der Ansprüche 1 bis 3, **dadurch gekennzeichnet, dass** jeweils zwei in Umfangsrichtung einander benachbart angeordnete Blechpakete (22.1 bis 22.n, 23.1, bis 23.n) durch eine unterschiedliche Dicke in Umfangsrichtung charakterisiert sind.

5. Statorbaueinheit (1) nach einem der Ansprüche 1 bis 4, **dadurch gekennzeichnet, dass** ein die Ankerwicklung (3) tragendes und die Jocheinheit (6) wenigstens teilweise in Umfangsrichtung und teilweise in axialer Richtung umschließendes ringförmiges Zwischenelement (26) vorgesehen ist.

6. Statorbaueinheit (1) nach einem der Ansprüche 1 bis 5, **dadurch gekennzeichnet, dass** die einzelnen Blechelemente (21.1 bis 21.n, 40.1 bis 40.n) oder die einzelnen Blechpakete (22.1 bis 22.n, 23.1 bis 23.n) form- und/oder kraftschlüssig mit den zwei Reihen von in Umfangsrichtung hintereinander angeordneten Zähnen (14.1 bis 14.n, 15.1 bis 15.n) und/oder dem ringförmigen Zwischenelement (26) verbunden sind.

7. Statorbaueinheit (1) nach Anspruch 6, **dadurch gekennzeichnet, dass** die kraftschlüssige Kopplung zwischen den Zahnringen (7, 8) oder Zahnringsegmenten und der Jocheinheit (6) und/oder dem Zwischenelement (26) und der Jocheinheit (6) über eine Pressverbindung realisiert wird.

8. Statorbaueinheit (1) nach einem der Ansprüche 6 oder 7, **dadurch gekennzeichnet, dass** die Zahnringe (7, 8) oder Zahnringsegmente und/oder das Zwischenelement (26) im Bereich ihres Innendurchmessers (33, 41) Führungsschlitze aufweisen, die in axialer Richtung ausgerichtet sind und der Aufnahme der Elektrobleche (21.1 bis 21.n, 40.1 bis 40.n) und/oder Blechpakete (22.1 bis 22.n, 23.1 bis 23.n) dienen.

9. Statorbaueinheit (1) nach einem der Ansprüche 1 bis 8, **dadurch gekennzeichnet, dass** die einzelnen in Umfangsrichtung hintereinander angeordneten Blechelemente (21.1 bis 21.n, 40.1 bis 40.n) oder Blechpakete (22.1 bis 22.n, 23.1 bis 23.n) stoffschlüssig mit den zwei Reihen aus in Umfangsrichtung hintereinander angeordneten Zähnen (14.1 bis 14.n, 15.1 bis 15.n) und/oder dem ringförmigen Zwischenelement (26) verbunden sind.

10. Statoreinheit (4) nach einem der Ansprüche 5 bis 9, **gekennzeichnet durch** die folgenden Merkmale:
11.1 mit Mitteln (29) zur Fixierung der Lage der einzelnen Blechpakete (22.1 bis 22.n, 23.1 bis 23.n) in Einbaulage in radialer Richtung;
11.2 die Mittel (29) umfassen ein erstes ringförmiges, sich wenigstens über einen Teil der axialen Erstreckung der einzelnen Blechpakete (22.1 bis 22.n, 23.1 bis 23.n) erstreckendes ringförmiges Element (27) und Abstützmittel (25) zwischen dem ringförmigen Element (27) und den zur Rotationsachse (R) gerichteten Innenumfangsflächen der Blechpakete (22.1 bis 22.n, 23.1 bis 23.n).

11. Statorbaueinheit (1) nach einem der Ansprüche 1 bis 10, **dadurch gekennzeichnet, dass** die zwei Reihen von in Umfangsrichtung hintereinander angeordneten Zähnen (14.1 bis 14.n, 15.1 bis 15.n) jeweils von Zahnringen (7, 8) oder von in Umfangsrichtung benachbart hintereinander angeordneten Zahnringsegmenten gebildet werden, die hinsichtlich ihrer äußeren Abmessung und der Anzahl der Zähne (14.1 bis 14.n, 15.1 bis 15.n) vorzugsweise identisch aufgebaut sind und in Umfangsrichtung hintereinander um eine Polteilung T versetzt sind.

12. Statorbaueinheit (1) nach Anspruch 11, **dadurch gekennzeichnet, dass** jeder Zahnring (7, 8) oder jedes Zahnringsegment aus einer Mehrzahl von quer zur Rotationsachse des Rotors (5) bzw,. in axialer Richtung hintereinander gestapelten Elektroblechen (21.1 bis 21.n, 40.1 bis 40.n) oder einem ringförmigen Vollelement mit in Umfangsrichtung in bestimmten vordefinierten Abständen angeordneten randoffenen Aussparungen im Bereich von dessen Außendurchmesser unter Bildung der Zähne (14.1 bis 14.n, 15.1 bis 15.n) besteht.

13. Statorbaueinheit (1) nach Anspruch 11 oder 12, **dadurch gekennzeichnet, dass** der Zahnring (7, 8) in Umfangsrichtung wenigstens eine Unterbrechung aufweist.

14. Statorbaueinheit (1) nach einem der Ansprüche 1 bis 13, **dadurch gekennzeichnet, dass** die Abstandshalterelemente (32) als sich in axialer Richtung über die Breite der Statorbaueinheit (1) erstreckende Elemente ausgeführt sind, umfassend einen Endabschnitt, der sich in radialer Richtung an einer Stirnseite der Statorbaueinheit (1) erstreckt und über welchen die axiale Fixierung der Zahnelemente oder Zahnringe (7, 8) und der Jocheinheit (6) in axialer Richtung erfolgt.

15. Statorbaueinheit (1) nach Anspruch 14, **dadurch gekennzeichnet, dass** jedem Zahnring (7, 8) ein Endring (38) zur Begrenzung der Bewegbarkeit in axialer Richtung zugeordnet ist.

16. Statorbaueinheit (1) nach einem der Ansprüche 13 oder 14, **dadurch gekennzeichnet, dass** Mittel zur axialen Verspannung der Elemente Zahnring (7, 8), Jocheinheit (6) und Endring (38) vorgesehen sind.

17. Statorbaueinheit (1) nach einem der Ansprüche 1 bis 16, **dadurch gekennzeichnet, dass** die Jocheinheit (6) in Umfangsrichtung mehrteilig ausgeführt ist.

18. Statorbaueinheit (1) nach einem der Ansprüche 1 bis 17, **dadurch gekennzeichnet, dass** die erforderlichen Fügespalte zwischen den Einzelelementen mit Tränkharz aufgefüllt sind.

19. Statorbaueinheit (1) nach einem der Ansprüche 1 bis 18, **dadurch gekennzeichnet, dass** diese einen Innenstator einer Synchronmaschine bildet.

20. Statorbaueinheit (1) nach einem der Ansprüche 1 bis 19, **dadurch gekennzeichnet, dass** diese eine Mehrzahl von Statoreinheiten (4) entsprechend der Anzahl der Phasen der Synchronmaschine umfasst.

## Claims

1. A stator module (1) for a synchronous machine with transverse flux guidance, especially a transverse flux machine with at least one phase;
1.1 with a stator unit (4) which is allocated to the individual phase, carries an armature winding (3) and is allocated in the installed position to a rotor (5) by forming an air gap arranged in the radial direction relating to the rotational axis (R) of the rotor of the synchronous machine (2);
1.2 the stator unit (4) comprises two rows of teeth (14.1 to 14.n, 15.1 to 15.n) which are connected to each other via a yoke unit (6) by guiding the magnetic flux;
1.3 the yoke unit (6) is arranged annularly;
1.4 the yoke unit (6) comprises electric sheets (21.1 to 21.n, 40.1 to 40.n) which are stacked behind one another in the circumferential direction;
1.5 the individual electric sheets (21.1 to 21.n, 40.1 to 40.n) are combined into electric sheet stacks (22.1 to 22.n, 23.1 to 23.n), comprising at least two electric sheets (21.1 to 21.n, 40.1 to 40.n) each which are arranged behind one another in the circumferential direction;
1.6 the individual electric sheet stacks (21.1 to 21.n, 22.1 to 22.n) are arranged one behind the other in the circumferential direction and spaced from one another by forming intermediate spaces (34.1 to 34.n);
1.7 spacer elements (32) are arranged in the intermediate spaces (34.1 to 34.n) between two electric sheet stacks (21.1 to 21.n, 22.1 to 22.n) which are arranged adjacent to one another in the circumferential direction, **characterized by** the following features:
1.8 the electric sheet stacks (22.1 to 22.n, 23.1 to 23.n) arranged adjacent to one another in the circumferential direction have different heights of the sheets in the radial direction, when seen in the installed position.

2. A stator module (1) according to claim 1, **characterized in that** the electric sheets (21.1 to 21.n, 40.1 to 40.n) consist of grain-oriented electric sheet, with the plurality of the directional vectors describing the main magnetic direction facing at least with one directional component in the axial direction from one row (7, 8) of the teeth elements (14.1 to 14.n, 15.1 to 15.n) to the other row (8, 7) of teeth elements (14.1 to 14.n, 15.1 to 15.n).

3. A stator module (1) according to one of the claims 1 or 2, **characterized in that** the inside circumferential surfaces of two sheet stacks (22.1 to 22.n, 23.1 to 23.n) which are arranged adjacent to one another in the circumferential direction, which surfaces face in the radial direction to the rotational axis (R), each lie on different diameters.

4. A stator module (1) according to one of the claims 1 to 3, **characterized in that** two sheet stacks (22.1 to 22.n, 23.1 to 23.n) each which are arranged adjacent to one another in the circumferential direction are **characterized by** a different thickness in the circumferential direction.

5. A stator module (1) according to one of the claims 1 to 4, **characterized in that** an annular intermediate element (26) is provided which carries the armature winding (3) and encloses the yoke unit (6) at least partly in the circumferential direction and at least partly in the axial direction.

6. A stator module (1) according to one of the claims 1 to 5, **characterized in that** the individual sheet elements (21.1 to 21.n, 40.1 to 40.n) or the individual sheet stacks (22.1 to 22.n, 23.1 to 23.n) are connected in a positive or non-positive way with the two rows of teeth (14.1 to 14.n, 15.1 to 15.n) which are arranged behind one another in the circumferential direction and/or the annular intermediate elements (26).

7. A stator module (1) according to claim 6, **characterized in that** the non-positive coupling between the toothed rings (7, 8) or toothed ring segments and the yoke unit (6) and/or the intermediate element (26) and the yoke unit (6) is realized through a pressed connection.

8. A stator module (1) according to one of the claims 6 or 7, **characterized in that** the toothed rings (7, 8) or toothed ring segments and/or the intermediate element (26) comprise guide slits in the region of their inside diameter (33, 41) which are aligned in the axial direction and are used for receiving the electric sheets (21.1 to 21.n, 40.1 to 40.n) and/or sheet stacks (22.1 to 22.n, 23.1 to 23.n).

9. A stator module (1) according to one of the claims 1 to 8, **characterized in that** the individual sheet elements (21.1 to 21.n, 40.1 to 40.n) which are arranged behind one another in the circumferential direction or sheet stacks (22.1 to 22.n, 23.1 to 23.n) are materially connected with the two rows of teeth (14.1 to 14.n, 15.1 to 15.n) arranged behind one another in the circumferential direction and/or the annular intermediate element (26).

10. A stator module (1) according to one of the claims 5 to 9, **characterized by** the following features:
10.1 with means (29) for fixing the position of the individual sheet stacks (22.1 to 22.n, 23.1 to 23.n) in the installed position in the radial direction;
10.2 the means (29) comprise a first annular element (27) which extends over a portion of the axial extension of the individual sheet stacks (22.1 to 22.n, 23.1 to 23.n) and support means (25) between the annular elements (27) and the inside circumferential surfaces of the sheet stacks (22.1 to 22.n, 23.1 to 23.n) facing toward the rotational axis (R).

11. A stator module (1) according to one of the claims 1 to 10, **characterized in that** the two rows of teeth (14.1 to 14.n, 15.1 to 15.n) arranged behind one another in the circumferential direction are each formed by toothed rings (7, 8) or toothed ring segments which are arranged adjacent behind one another in the circumferential direction, which with respect to their outside dimensioning and the number of teeth (14.1 to 14.n, 15.1 to 15.n) are preferably arranged identically and are offset in the circumferential direction behind one another by a pole pitch T.

12. A stator module (1) according to claim 11, **characterized in that** each toothed ring (7, 8) or each toothed ring segment consists of a plurality of electric sheets (21.1 to 21.n, 40.1 to 40.n) stacked transversely to the rotational axis of the rotor (5) or behind one another in the axial direction, or an annular full element with open-edged recesses arranged in the circumferential direction at certain predefined distances in the region of its outside diameter by forming the teeth (14.1 to 14.n, 15.1 to 15.n).

13. A stator module (1) according to claim 11 or 12, **characterized in that** the toothed ring (7, 8) comprises at least one interruption in the circumferential direction.

14. A stator module (1) according to one of the claims 1 to 13, **characterized in that** the space elements (32) are arranged as elements extending in the axial direction over the width of the stator module (1), comprising an end section which extends in the radial direction on the face side of the stator module (1) and through which the axial fixing of the tooth elements or toothed rings (7, 8) and the yoke unit (6) occurs in the axial direction.

15. A stator module (1) according to claim 14, **characterized in that** an end ring (38) for limiting the mobility in the axial direction is associated with each toothed ring (7, 8).

16. A stator module (1) according to one of the claims 13 or 14, **characterized in that** means for axially clamping the elements of toothed ring (7, 8), yoke unit (6) and end ring (38).

17. A stator module (1) according to one of the claims 1 to 16, **characterized in that** the yoke unit (6) is arranged in several parts in the circumferential direction.

18. A stator module (1) according to one of the claims 1 to 17, **characterized in that** the required joining gaps between the individual elements are filled with impregnating resin.

19. A stator module (1) according to one of the claims 1 to 18**, characterized in that** it forms an inside stator of a synchronous machine.

20. A stator module (1) according to one of the claims 1 to 19, **characterized in that** it comprises a plurality of stator units (4) according to the number of the phases of the synchronous machine.

## Revendications

1. Ensemble de stator (1) pour un moteur synchrone à flux transversal, en particulier un moteur à flux transversal à au moins une phase,
1.1 avec une unité de stator (4) associée à l'une des phases et portant un enroulement d'induit (3), qui est associée à un rotor (5) dans la position de montage en formant un entrefer disposé dans le sens radial par rapport à l'axe de rotation (R) du rotor du moteur synchrone (2) ;
1.2 l'unité de stator (4) comprend deux rangées de dents (14.1 à 14.n, 15.1 à 15.n) disposées les unes derrière les autres dans le sens de la circonférence, qui sont reliées entre elles par une unité de culasse (6) de façon à conduire le flux magnétique ;
1.3 l'unité de culasse (6) est réalisée en forme d'anneau ;
1.4 l'unité de culasse (6) comprend des tôles électriques (21.1 à 21.n, 40.1 à 40.n) disposées les unes derrière les autres dans le sens de la circonférence ;
1.5 les différentes tôles électriques (21.1 à 21.n, 40.1 à 40.n) sont regroupées en paquets de tôles électriques (22.1 à 22.n, 23.1 à 23.n) comprenant au moins deux tôles électriques (21.1 à 21.n, 40.1 à 40.n) disposées l'une derrière l'autre dans le sens de la circonférence ;
1.6 les différents paquets de tôles électriques (21.1 à 21.n, 22.1 à 22.n) sont disposés à distance les uns derrière les autres dans le sens de la circonférence en formant des espaces intermédiaires (34.1 à 34.n) ;
1.7 des éléments d'écartement (32) sont disposés dans les espaces intermédiaires (34.1 à 34.n) entre deux paquets de tôles électriques (21.1 à 21.n, 22.1 à 22.n) disposés l'un derrière l'autre dans le sens de la circonférence,
**caractérisé en ce que** :
1.8 les différents paquets de tôles (22.1 à 22.n, 23.1 à 23.n) disposés les uns près des autres dans le sens de la circonférence présentent des hauteurs de tôles différentes, vus dans le sens radial dans la position de montage.

2. Ensemble de stator (1) selon la revendication 1, **caractérisé en ce que** les tôles électriques (21.1 à 21.n, 40.1 à 40.n) sont faites de tôle électrique à grains orientés, la majorité des vecteurs directionnels décrivant la direction magnétique principale ayant au moins une composante directionnelle dans le sens axial d'une rangée (7, 8) d'éléments de dents (14.1 à 14.n, 15.1 à 15.n) à l'autre rangée (8, 7) d'éléments de dents (14.1 à 14.n, 15.1 à 15.n).

3. Ensemble de stator (1) selon l'une des revendications 1 ou 2, **caractérisé en ce que** les surfaces de circonférence intérieures orientées dans le sens radial vers l'axe de rotation (R) de deux paquets de tôle (22.1 à 22.n, 23.1 à 23.n) voisins dans le sens de la circonférence se trouvent chacune sur un diamètre différent.

4. Ensemble de stator (1) selon l'une des revendications 1 à 3, **caractérisé en ce que** chaque paire de paquets de tôle (22.1 à 22.n, 23.1, à 23.n) voisins dans le sens de la circonférence est **caractérisée par** une épaisseur différente dans le sens de la circonférence.

5. Ensemble de stator (1) selon l'une des revendications 1 à 4, **caractérisé en ce qu'**il est prévu un élément intermédiaire annulaire (26) portant l'enroulement d'induit (3) et entourant l'unité de culasse (6) au moins partiellement dans le sens de la circonférence et partiellement dans le sens axial.

6. Ensemble de stator (1) selon l'une des revendications 1 à 5, **caractérisé en ce que** les différents éléments en tôle (21.1 à 21.n, 40.1 à 40.n) ou les différents paquets de tôle (22.1 à 22.n, 23.1 à 23.n) sont reliés par correspondance de forme et/ou par adhérence aux deux rangées de dents (14.1 à 14.n, 15.1 à 15.n) disposées les unes derrière les autre dans le sens de la circonférence et/ou à l'élément intermédiaire annulaire (26).

7. Ensemble de stator (1) selon la revendication 6, **caractérisé en ce que** le couplage par adhérence entre les bagues dentées (7, 8) ou les segments de bague dentée et l'unité de culasse (6) et/ou entre l'élément intermédiaire (26) et l'unité de culasse (6) est réalisé par un assemblage pressé.

8. Ensemble de stator (1) selon l'une des revendications 6 ou 7, **caractérisé en ce que** les bagues dentées (7, 8) ou segments de bague dentée et/ou l'élément intermédiaire (26) présentent au niveau de leur diamètre intérieur (33, 41) des fentes de guidage qui sont orientées dans le sens axial et servent à recevoir les tôles électriques (21.1 à 21.n, 40.1 à 40.n) et/ou les paquets de tôles (22.1 à 22.n, 23.1 à 23.n).

9. Ensemble de stator (1) selon l'une des revendications 1 à 8, **caractérisé en ce que** les différents éléments de tôle (21.1 à 21.n, 40.1 à 40.n) ou paquets de tôles (22.1 à 22.n, 23.1 à 23.n) disposés les uns derrière les autres dans le sens de la circonférence sont reliés par union du matériau avec les deux rangées de dents (14.1 à 14.n, 15.1 à 15.n) disposées les unes derrière les autres dans le sens de la circonférence et/ou avec l'élément intermédiaire annulaire (26).

10. Unité de stator (4) selon l'une des revendications 5 à 9, **caractérisé en ce que :**
10.1 il possède des moyens (29) pour fixer la position de chaque paquet de tôles (22.1 à 22.n, 23.1 à 23.n) dans la position de montage dans le sens radial ;
10.2 les moyens (29) comprennent un premier élément annulaire (27) s'étendant au moins sur une partie de l'étendue axiale des différents paquets de tôles (22.1 à 22.n, 23.1 à 23.n) et des moyens de soutien (25) entre l'élément annulaire (27) et les surfaces périphériques intérieures des paquets de tôles (22.1 à 22.n, 23.1 à 23.n) dirigées vers l'axe de rotation (R).

11. Ensemble de stator (1) selon l'une des revendications 1 à 10, **caractérisé en ce que** les deux rangées de dents (14.1 à 14.n, 15.1 à 15.n) disposées les unes derrière les autres dans le sens de la circonférence sont formées par des bagues dentées (7, 8) ou par des segments de bague dentée voisins les uns derrière les autres dans le sens de la circonférence, dont les dimensions extérieures et le nombre de dents (14.1 à 14.n, 15.1 à 15.n) sont de préférence identiques et qui sont décalées les uns derrière les autres dans le sens de la circonférence autour d'un écartement polaire T.

12. Ensemble de stator (1) selon la revendication 11, **caractérisé en ce que** chaque bague dentée (7, 8) ou chaque segment de bague dentée se compose d'une pluralité de tôles électriques (21.1 à 21.n, 40.1 à 40.n) empilées les unes derrière les autres perpendiculairement à l'axe de rotation du rotor (5) ou dans le sens axial ou d'un élément plein avec des ouvertures dans le bord disposées à des intervalles prédéfinis dans le sens de la circonférence au niveau de son diamètre extérieur pour former les dents (14.1 à 14.n, 15.1 à 15.n).

13. Ensemble de stator (1) selon la revendication 11 ou 12, **caractérisé en ce que** la bague dentée (7, 8) présente au moins une ouverture dans le sens de la circonférence.

14. Ensemble de stator (1) selon l'une des revendications 1 à 13, **caractérisé en ce que** les éléments d'écartement (32) sont réalisés comme des éléments s'étendant dans le sens axial sur la largeur de l'ensemble de stator (1), comprenant une partie d'extrémité qui s'étend dans le sens radial sur une face d'extrémité de l'ensemble de stator (1) et par lesquels est réalisée la fixation des éléments de dent ou des bagues dentées (7, 8) et de l'unité de culasse (6) dans le sens axial.

15. Ensemble de stator (1) selon la revendication 14, **caractérisé en ce que** chaque bague dentée (7, 8) est associée à une bague de terminaison (38) pour limiter la mobilité dans le sens axial.

16. Ensemble de stator (1) selon l'une des revendications 13 ou 14, **caractérisé en ce que** des moyens sont prévus pour le serrage axial des éléments de bague dentée (7, 8), d'unité de culasse (6) et de bague de terminaison (38).

17. Ensemble de stator (1) selon l'une des revendications 1 à 16, **caractérisé en ce que** l'unité de culasse (6) est réalisée en plusieurs parties dans le sens de la circonférence.

18. Ensemble de stator (1) selon l'une des revendications 1 à 17, **caractérisé en ce que** l'espace de joint nécessaire entre les différents éléments est rempli avec de la résine d'enrobage.

19. Ensemble de stator (1) selon l'une des revendications 1 à 18, **caractérisé en ce qu'**il forme un stator intérieur d'un moteur synchrone.

20. Ensemble de stator (1) selon l'une des revendications 1 à 19, **caractérisé en ce qu'**il comprend une pluralité d'unités de stator (4) correspondant au nombre de phases du moteur synchrone.
